# EUROPEAN PATENT SPECIFICATION

(11) **EP 3 307 588 B1**
(45) Date of publication and mention of the grant of the patent: **24.03.2021**
(21) Application number: 16808226.1
(22) Date of filing: 08.06.2016
(51) Int. Cl.: B60R 9/00, B60R 9/04, B60R 9/058, B60R 11/00

(54) **SLOTTED CROSSBAR**
GESCHLITZTER QUERTRÄGER
BARRE TRANSVERSALE FENDUE

(30) Priority: 09.06.2015 US 201562173333 P; 12.06.2015 US 201562175192 P
(43) Date of publication of application: 18.04.2018
(73) Proprietor: Yakima Australia Pty Limited, Brendale, QLD 4500 (AU)
(72) Inventor: MCFADDEN, Scott, A., Portland, OR 97229 (US); CONDON, David, Beaverton, OR 97008 (US); ELLIOTT, John, Mark, Beaverton, OR 97007 (US)
(74) Representative: V.O.
(86) International application number: PCT/US2016/036524
(87) International publication number: WO 2016/201001

(56) References cited:
- EP-A1- 0 527 708
- EP-A1- 2 492 149
- WO-A1-92/12874
- WO-A1-2014/022435
- WO-A1-2015/040845
- CA-A1- 2 151 681
- US-A- 4 842 176
- US-A- 5 226 570
- US-A- 5 464 140
- US-A- 5 511 708
- US-A- 5 848 743
- US-A- 6 010 048
- US-A1- 2016 167 590
- US-B2- 8 925 775

## Description

### FIELD

This disclosure relates to systems and methods for attaching cargo racks to vehicles. More specifically, the disclosed embodiments relate to slotted crossbars for vehicle rooftop cargo racks.

The document EP0527708 A1 discloses self-centering roof rack systems for motor vehicles. More particularly, it relates to such systems that can be attached to or removed from the vehicle by a single handle mechanism. The handle operates on a threaded shaft, one half of the shaft with right screw thread, the other half with left screw thread, and works simultaneously upon two nuts, each connected to one of the roof rack uprights: each of the above-mentioned uprights ending with a floating hook which grips the motor vehicle roof edge. The double screw allows the fitting and fastening of the roof rack on the vehicle's roof symmetrically by turning a handle placed on one side of the system.

### INTRODUCTION

Popularity of recreational activities continues to grow, with a corresponding growth in the need for carrying recreational equipment and cargo on vehicles. Accordingly, various equipment carriers and accessories have been developed over the years, for recreational items such as bicycles, skis, surf boards, standup paddle (SUP) boards, kayaks, and the like. Many such carriers and accessories are supported on vehicle rooftop racks.

Meanwhile, the number of different vehicle rooftop configurations has grown as well, with various shapes, sizes, and features depending on the make and model of the vehicle. For example, rooftop rails may be flush on the roof, raised, or not present at all. Similarly, rooftops themselves may be relatively flat or curved, and a width of the roof may change from front to back.

Rooftop racks typically include crossbars mounted to the vehicle roof, and the crossbars themselves may be of various shapes and sizes, from square to round to aerodynamic. Aerodynamic crossbars may be designed for noise reduction and sometimes include an upper T-slot for attaching one or more cargo-specific accessories and/or cargo boxes. Additional features may be machined into the crossbar to facilitate attachment of supportive crossbar-to-vehicle couplers.

### SUMMARY

The present disclosure provides a slotted crossbar Slotted crossbars according to the present teachings include upper and lower continuous slots running across the length of the crossbar. Channels associated with each slot may be structurally independent of each other. Benefits of crossbars according to the present teachings may include simplified manufacturability, improved stiffness and strength, versatility with respect to host vehicle widths, and others.

The crossbar for a vehicle rooftop cargo rack includes an elongate metal body having a first end, a second end, and an aerodynamic outer profile defining an upper surface and a lower surface of the body; a continuous first slot running lengthwise across the upper surface from the first end to the second end; and a continuous second slot running lengthwise across the lower surface from the first end to the second end.

In some embodiments, a rack for carrying cargo on top of a vehicle may include a crossbar and a pair of couplers configured to mount the crossbar on top of a vehicle such that a long axis of the crossbar is substantially horizontal and perpendicular to a longitudinal axis of the vehicle; the crossbar including an elongate metal body having a first end, a second end, and an aerodynamic outer profile defining an upper surface and a lower surface of the body; a continuous first slot running lengthwise across the upper surface of the body of the crossbar from the first end to the second end, the first slot opening into a first channel; and a continuous second slot running lengthwise across the lower surface of the body of the crossbar from the first end to the second end, the second slot opening into a second channel; wherein the first channel and the second channel are structurally independent from each other.

A method of manufacturing a crossbar for a vehicle rooftop cargo rack may include: extruding an aluminum bar having a first end, a second end, and an elongated profile defining an upper surface and a lower surface of the bar; wherein the extruding step includes forming a plurality of lengthwise internal cavities passing continuously through the bar, a continuous first slot running lengthwise across the upper surface of the bar from the first end to the second end, the first slot opening into a first channel, and a continuous second slot running lengthwise across the lower surface of the bar from the first end to the second end, the second slot opening into a second channel that is structurally independent from the first channel.

Features, functions, and advantages may be achieved independently in various embodiments of the present disclosure, or may be combined in yet other embodiments, further details of which can be seen with reference to the following description and drawings.

### BRIEF DESCRIPTION OF THE DRAWINGS

Fig. 1 is a schematic block diagram of a rooftop cargo rack system.
Fig. 2 is an oblique isometric view of a portion of an illustrative vehicle showing an illustrative rooftop rack mounted thereon.
Fig. 3 is an isometric view of a portion of an illustrative slotted crossbar in accordance with aspects of the present disclosure.
Fig. 4 is a bottom plan view of the crossbar of Fig. 3.
Fig. 5 is a top plan view of the crossbar of Fig. 3.
Fig. 6 is an end elevation view of the crossbar of Fig. 3.
Fig. 7 is an isometric exploded view of an illustrative crossbar clamp suitable for a slotted crossbar according to the present teachings.
Fig. 8 is an end elevation view of the crossbar clamp of Fig. 7 assembled and installed in an illustrative slotted crossbar.
Fig. 9 is a schematic view showing various possible combinations of illustrative clamps and couplers with a slotted crossbar according to the present teachings.
Fig. 10 is a flow chart depicting steps of an illustrative method for manufacturing a crossbar in accordance with aspects of the present disclosure.

### DESCRIPTION

References to "embodiments" throughout the description which are not under the scope of the appended claims merely represent possible exemplary executions and are therefore not part of the present invention.

Various aspects and examples of a crossbar having upper and lower continuous, longitudinal slots, as well as related devices and methods, are described below and illustrated in the associated drawings. Unless otherwise specified, a slotted crossbar and/or its various components may, but are not required to, contain at least one of the structure, components, functionality, and/or variations described, illustrated, and/or incorporated herein. Furthermore, unless specifically excluded, the process steps, structures, components, functionalities, and/or variations described, illustrated, and/or incorporated herein in connection with the present teachings may be included in other similar devices and methods, including being interchangeable between disclosed embodiments. The following description of various examples is merely illustrative in nature and is in no way intended to limit the disclosure, its application, or uses. Additionally, the advantages provided by the examples and embodiments described below are illustrative in nature and not all examples and embodiments provide the same advantages or the same degree of advantages.

### Definitions

The following definitions apply herein, unless otherwise indicated.

"Comprising," "including," and "having" (and conjugations thereof) are used interchangeably to mean including but not necessarily limited to, and are openended terms not intended to exclude additional, unrecited elements or method steps.

Terms such as "first", "second", and "third" are used to distinguish or identify various members of a group, or the like, and are not intended to show serial or numerical limitation.

The terms "inboard," "outboard," "forward," and "aft" (and the like) are intended to be understood in the context of a host vehicle on which systems described herein may be mounted or otherwise attached. For example, "outboard" may indicate a relative position that is laterally farther from the centerline of the vehicle, or a direction that is away from the vehicle centerline. Conversely, "inboard" may indicate a direction toward the centerline, or a relative position that is closer to the centerline. Similarly, "forward" means toward the front portion of the vehicle, and "aft" means toward the rear of the vehicle. In the absence of a host vehicle, the same directional terms may be used as if the vehicle were present. For example, even when viewed in isolation, a crossbar may have a "forward" edge, based on the fact that the edge in question would be installed facing the front portion of a host vehicle.

### Overview of a Roof Rack System

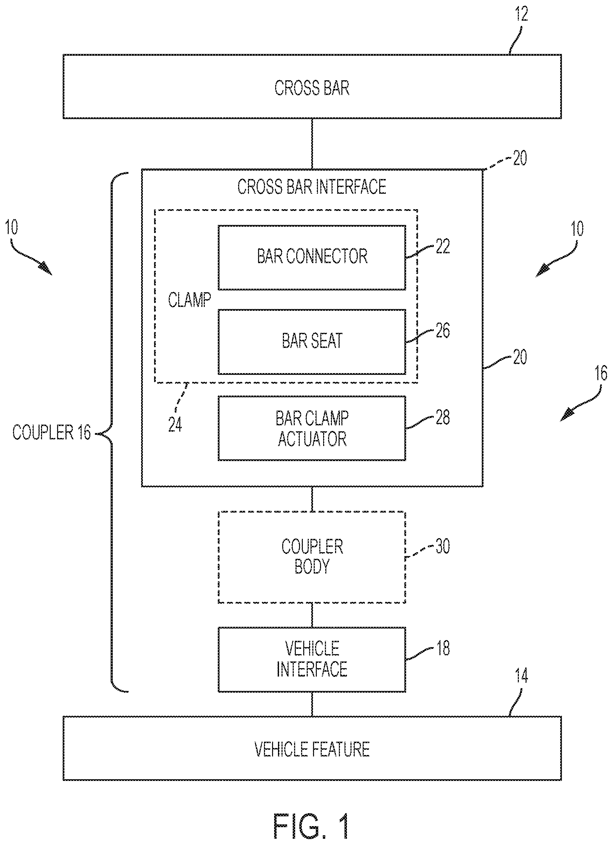

In general, and with reference to Fig. 1, a vehicle roof rack system 10 may include any suitable combination of components configured to provide a selected crossbar securely affixed to a vehicle rooftop. The crossbar may be supported at either end by a pair of supports having features that facilitate attachment to corresponding feature(s) on the specific vehicle. The crossbar supports may also be referred to as towers, feet, or mounts, and are referred to herein as couplers. A versatile and efficient system may be provided to fit a selected crossbar to the wide range of vehicle rooftops present in the marketplace.

Accordingly, roof rack system 10 may include one or more types of crossbars 12 suitable for use on a range of vehicles. Each type of crossbar 12 may include any suitable crossbar configured to be mounted transverse to the long axis of a vehicle, across a rooftop, and to support loads placed thereon. For example, a crossbar 12 may support a cargo box, or a cargo-specific accessory, such as a bicycle carrier, ski carrier, kayak carrier, and the like. Crossbars 12 may be referred to as rails, cross-rails transverse supports, support bars, and/or the like. Crossbars are typically mounted on a vehicle in pairs, such that a forward and an aft crossbar are present on the vehicle for proper load carrying. Crossbars 12 may have any suitable cross section, such as round, square, teardrop, aerodynamic, and/or any other suitable shape or combination of shapes. A specific embodiment of crossbar 12 is described in further detail below.

Crossbars 12 are supported by attaching or fastening each of the crossbars to one or more specific vehicle features 14. Vehicles come in many shapes and sizes, with a corresponding array of roof topologies. Vehicle features 14, to which the crossbars may be attached, can include raised rails running along lateral sides of a rooftop, flush rails with no space between the rails and the roof, channels or hard points on the roof, side edges or gutters of a naked roof, and/or the like.

To fasten the outboard ends of the crossbars to features 14, system 10 may include one or more crossbar-to-vehicle couplers 16, also referred to as coupler assemblies, supports, towers, feet, or mounts, as mentioned above. Each coupler 16 may include any suitable vehicle interface 18 configured to attach, clamp, and/or removably connect to one or more vehicle features 14. Each coupler 16 may also include any suitable crossbar interface 20 configured to provide an attachment point or mount for crossbar 12.

In some examples, crossbar interface 20 may include a universal interface for connecting a variety of crossbars. For example, crossbar interface 20 may include a threaded bolt protruding upward from support 16. Each specific crossbar 12 may include or be associated with a bar connector 22 (also referred to as an adapter) configured to provide a crossbar-specific bar clamp 24 when combined with a bar seat 26. In this example, bar connector 22 may include a threaded portion for receiving the threaded bolt, as well as a holder portion for gripping, grasping, or grabbing onto the specific crossbar.

Bar clamp 24 may be used to removably and securely attach crossbar 12 to coupler 16. For example, bar connector 22 may comprise a movable capturing portion configured to secure the crossbar against seat portion 26. Accordingly, crossbar interface 20 of coupler 16 includes a crossbar (or bar) clamp actuator 28 configured to tighten, draw together, or otherwise cause clamp 24 to securingly engage the crossbar. Bar clamp actuator 28 may include a manual actuator or manual actuating mechanism.

Bar connector 22 and/or bar seat 26 may be grouped or provided with crossbar 12 to form a bar kit suitable for connecting to remaining elements of crossbar interface 20 of one or more different couplers 16. In other examples, bar connector 22 and/or bar seat 26 may be grouped or provided with coupler 16, to form a customized coupler suitable for connecting to a specific crossbar 12. From these examples, it should be clear that selected combinations of subcomponents of system 10 may be provided independently or separately, and combined or assembled as appropriate (e.g., for a specific vehicle).

In some examples, coupler 16 may include a body or body portion 30 providing structural and/or other functional aspects of the coupler, e.g., locking devices, environmental, aesthetic, and/or aerodynamic outer housing features, internal and/or external support structure, etc. Vehicle interface 18 and/or crossbar interface 20 may be attached, unitary with, and/or coupled to coupler body portion 30. Alternatively or additionally, crossbar interface 20 and vehicle interface 18 may be coupled to each other.

Vehicle interface 18 may include any suitable structure and/or device configured to removably attach to a given vehicle feature (or features) 14. For example, vehicle interface 18 may include a clamp, hook, bolt, clip, strap, and/or the like, and/or any combination of these. To provide an efficient and versatile system, a selected number of vehicle interface types may be provided, some having modifiable or selectable components for further customization. Specific examples of vehicle interfaces 18 are mentioned below.

Accordingly, system 10 may allow a user to choose a type of crossbar 12, select a coupler 16 having a vehicle interface 18 appropriate for attachment to vehicle feature 14 of the user's vehicle, and clamp the crossbar to the support using a corresponding bar connector 22 and bar seat 26.

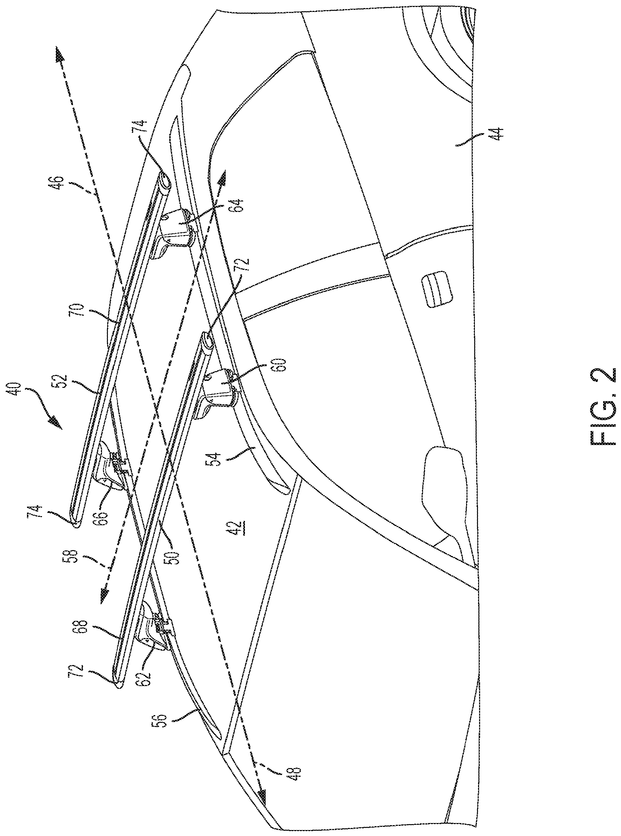

Turning to Fig. 2, a specific example of a roof rack 40 is depicted, attached to an illustrative roof 42 of a vehicle 44. Roof rack 40 is a selected example of roof rack 10, described above. Accordingly, similar components may be labeled with similar reference numbers. Rack 40 may be used for carrying cargo and/or cargo-specific accessories on top of vehicle 44. Vehicle 44 has a longitudinal or central axis 46 generally coinciding with (e.g., running parallel to) a direction of vehicular travel 48.

Rack 40 includes a pair of crossbars 50 and 52 having aerodynamic shapes and attached to flush rail features 54 and 56 of vehicle roof 42. Each crossbar is supported and mounted on vehicle 44 by a respective pair of couplers configured to mount the crossbar on top of the vehicle with the crossbar substantially perpendicular to longitudinal axis 46. Accordingly, crossbars 50 and 52 are substantially parallel to each other and oriented across a width of the vehicle roof, as generally indicated by a lateral axis 58 in Fig. 2.

Crossbar 50 is mounted on top of the vehicle by couplers 60 and 62, and crossbar 52 is mounted on top of the vehicle using couplers 64 and 66. In this example, couplers 60, 62, 64, 66 have a double-clip style vehicle interface configured to clamp to the flush bar vehicle features. Other styles may be suitable, and other vehicle features may be present. In this example, crossbars 50 and 52 are slotted crossbars, each including a lengthwise upper slot 68, 70 and a pair of end caps 72, 74.

### Examples, Components, and Alternatives

The following sections describe selected aspects of exemplary slotted crossbars as well as related systems and/or methods. The examples in these sections are intended for illustration and should not be interpreted as limiting the entire scope of the present disclosure. Each section may include one or more distinct inventions, and/or contextual or related information, function, and/or structure.

### Illustrative Slotted Crossbar

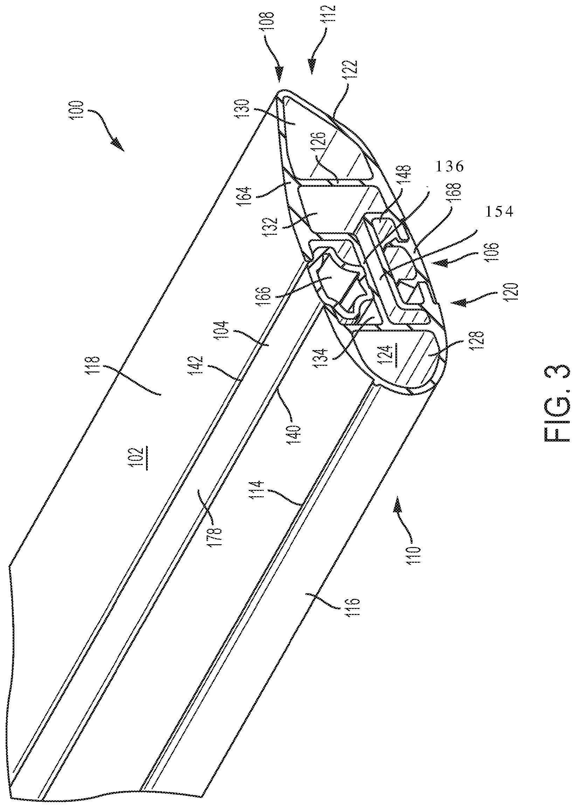

As shown in Figs. 3-6, this section describes a slotted crossbar 100 suitable for use in a rooftop rack system (e.g., system 10) in accordance with aspects of the present disclosure. Slotted crossbar 100 is an example of crossbar 12 and of crossbars 50, 52, described above. Accordingly, crossbar 100 shares the substantially as described above with respect to those crossbars, and additional details and features are described below.

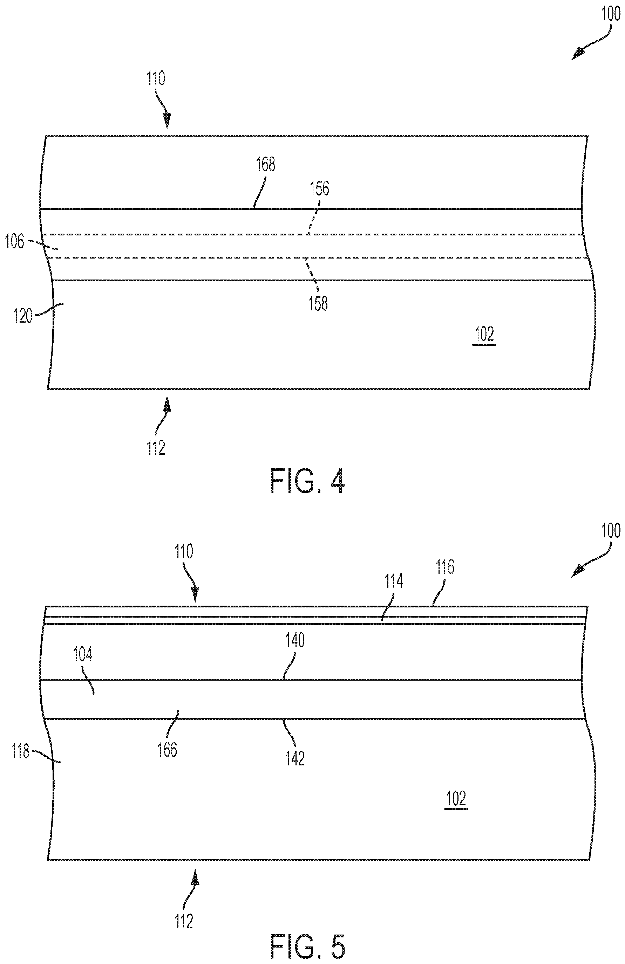

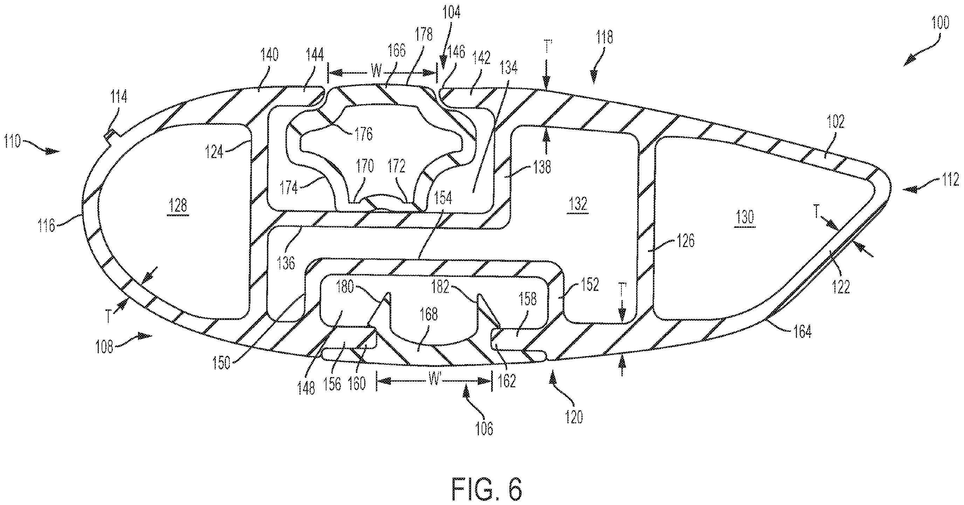

Fig. 3 is an oblique isometric view of an end portion of crossbar 100. Fig. 4 is a bottom plan view of a portion of crossbar 100. Fig. 5 is a top plan view of a portion of crossbar 100. Fig. 6 is an end elevation view of crossbar 100. Given the construction of crossbar 100, Fig. 6 could also be a cross-sectional view of the crossbar at any given point along its length.

Crossbar 100 includes a body 102 having an upper slot 104 and a lower slot 106. Body 102 may include any suitable unitary structure configured as an elongate bar having sufficient stiffness and strength to withstand expected environmental forces while supporting one or more cargo elements coupled thereto or thereon. In this example, bar 102 is an extruded metal bar having an aerodynamic outer profile or cross-sectional shape 108, also referred to as an airfoil-like shape, and a plurality of internal chambers or cavities defined by internal walls or webs, described further below. In some examples, body 102 of crossbar 100 is an extruded aluminum bar.

Shape 108 is generally configured to reduce the noise associated with air flow over the crossbar during typical driving conditions. Shape 108 is loosely based on a standard airfoil shape developed by the National Advisory Committee for Aeronautics (NACA). Accordingly, body 102 has a rounded leading edge portion 110 on a forward side of the crossbar, and a tapered trailing edge portion 112 on a rear or aft side of the crossbar. However, the shape is modified to reduce noise. For example, a longitudinal ridge 114 runs along the length of leading edge portion 110, approximately half way between a forward vertex 116 of the leading edge and a top portion 118 of the crossbar body. Ridge 114 may also be referred to as a strip, a trip strip, and/or an air trip strip. Similar to a stall strip on a wing, ridge 114 causes turbulence in the air flowing above the crossbar.

Furthermore, shape 108 is asymmetrical with respect to a horizontal plane passing through vertex 116, such that an upper half of the crossbar has a different shape than a lower half of the crossbar. For example, top portion 118 is flattened, or generally planar in the vicinity of upper slot 104. This flattened top portion facilitates mounting of accessories on the crossbar, such as by bolting or otherwise affixing the accessory in slot 104. This flattened shape is also distinguished from the generally curved or curvilinear shape of a bottom portion 120.

Additionally, shape 108 is further modified from the symmetrical NACA airfoil by a cutback angle 122 in trailing edge portion 112. Cutback angle 122 truncates the otherwise long, symmetrical tapering of the trailing edge of the airfoil at an oblique angle. This results in an asymmetrical trailing edge portion 112.

Together, these asymmetrical features cause air flowing over the top of the crossbar to behave differently than air flowing under the bottom of the crossbar. Specifically, the airflow is changed and/or disrupted, such that harmonics and other noise-producing airflow phenomena are avoided.

Internally, body 102 may include a plurality of walls or webs. Because body 102 may be an extruded structure, these walls or webs will typically run along the entire length of the crossbar. The internal walls define internal structures as well as empty or hollow spaces, referred to as cavities.

Specifically in this example, two vertical webs, a first (forward) vertical web 124 and a second (aft) vertical web 126, connect the upper and lower walls of body 102. Vertical webs 124 and 126 provide structural stiffness and strength to crossbar 100, and run along the entire length of body 102. In general, forward vertical web 124 is disposed adjacent leading edge portion 110, and defines a forward cavity 128. Similarly, aft vertical web 126 is disposed adjacent trailing edge portion 112, and defines an aft cavity 130. A central cavity 132 is defined between the two vertical webs.

Upper slot 104 may be referred to as an upper T-slot or tee slot. Slot 104 includes an upper channel 134 formed by vertical web 124, a substantially horizontal floor portion 136, and a substantially vertical wall portion 138. The gap or opening of slot 104 is formed above upper channel 134 by a pair of overhanging lips 140, 142, having respective distal end portions 144, 146 that are spaced apart to form a width W of the slot. Distal end portions 144, 146 may be tapered to accommodate an in-fill portion (described below). Dimensions of upper channel 134 and width W may be selected to facilitate receiving T-bolts, docking cleats, and other fasteners typically utilized to attach accessories to T-slot crossbars. Upper slot 104 may run continuously across the entire length of crossbar 100. End openings of upper slot 104 may be covered by removable end caps, such as end caps 72 and 74.

Lower slot 106 may be referred to as a lower T-slot or tee slot. Slot 106 includes a lower channel 148 formed by a pair of vertical walls 150, 152 joined by a substantially horizontal ceiling portion 154. The gap or opening of slot 106 is formed below lower channel 148 by a pair of overhanging lips 156, 158, having respective distal end portions 160, 162 that are spaced apart to form a width W' of the lower slot. Dimensions of lower channel 148 and width W' may be selected to facilitate receiving a T-connector or other portion of a clamping assembly used to attach crossbar 100 to a crossbar-to-vehicle coupler. Lower slot 106 may run continuously across the entire length of crossbar 100. End openings of lower slot 106 may be covered by removable end caps, such as end caps 72 and 74.

A perimeter wall or shell 164 may form shape 108, and may comprise leading edge portion 110, trailing edge portion 112, upper/top portion 118, and lower/bottom portion 120. Shell 164 may have one or more wall thicknesses. For example, leading edge portion 110 and trailing edge portion 112 may have a first thickness T. In some examples, webs 124 and 126 may also have thickness T. In some examples, thickness T may be a minimum thickness based on an applicable extrusion process. Top portion 118 and bottom portion 120, on the other hand, may have a greater thickness T'. In some examples, T' is approximately twice as thick as T. In some examples, T' is greater than twice as thick as T. This may facilitate greater load bearing capacities in the top and bottom portions, where forces transverse to the walls are greater and more likely to be present.

Upper slot 104 and lower slot 106 may be structurally independent from each other, such that the two slots do not share any common walls or other features. For example, the heights (or depths) of the respective channels are together less than the overall height of the crossbar. Accordingly, floor 136 of upper channel 134 is distinct from and spaced from ceiling 154 of lower channel 148. Central cavity 132 may be at least partially defined by the space between the two channels.

Furthermore, upper slot 104 and lower slot 106 may be horizontally offset from each other. For example, upper slot 104 may be disposed in a suitable location along top portion 118 where the shell can be substantially flat to receive and support accessories mounted thereon. Lower slot 106, on the other hand, may be disposed such that the lower slot is substantially centered on the curvature of bottom portion 120. This may facilitate the use of single-design crossbar-to-vehicle couplers, as the symmetrical curvature around the lower slot permits the same interface to be used on both left and right sides of the vehicle (i.e., right and left ends of the crossbar).

Crossbar 100 may further include an upper infill 166 and a lower infill 168. Upper infill 166 may include any suitable resilient structure configured to fit within upper channel 134 and provide a selectively deformable surface to bridge the gap between upper lips 140 and 142. Upper infill 166 may include a shaped tube made of rubber or other resilient material. In the examples shown in Figs. 3, 5, and 6, upper infill 166 is a tubular member having a mushroom-shaped cross section. A pair of lower feet 170, 172 rest on floor 136 of the upper channel. A stem portion 174 connects the feet to an upper mushroom head portion 176 that presses into upper slot 104 from below, exposing an upper surface 178 that is generally flush with top portion 118. As mentioned above, lips 140 and 142 may be tapered to accommodate mushroom head portion 176.

Upper infill 166 is configured to remain in slot 104 during operational use of the crossbar. Infill 166 is deformable and resilient, which facilitates insertion of T-bolts, docking cleats, and the like into slot 104 by pushing or otherwise deforming infill 166 downward into channel 134. Upper infill 166 then remains in position along the remaining length of slot 104 to maintain the aerodynamic shape of the upper surface of crossbar 100.

Lower infill 168 may include any suitable structure configured to removably cover the opening of lower slot 106 and maintain an aerodynamic bottom surface of the crossbar. In this example, lower infill 168 is a flexible strip, which may be resilient, having a pair of flanged protrusions 180, 182. Protrusions 180 and 182 are spaced apart about the same width as W' of the lower slot, with flanges or barbs extending forward and aft, such that the flexible protrusions and flanges hold infill 168 in the slot (i.e., between lips 156, 158) and resist removal. Lower infill 168 is configured to be removable and reinsertable, such that the lower infill may be removed, perhaps sectioned, and reinserted as desired. For example, attachment of a crossbar-to-vehicle coupler may include cutting a portion of the lower infill to create a gap in which the coupler can interface with lower slot 106. Lower infill 168 may be pressed into the slot and/or slit in from an open end of the crossbar (i.e., with the end cap removed). Press-insertion of lower infill 168 into slot 106 may be facilitated by a tapering of the upper/distal ends of protrusions 180, 182.

Upper infill 166 is described here as a "stay-in" type of infill and lower infill 168 is described as a "pull-out" type of infill. However, any suitable combination of infill styles may be used, or none at all. For example, the upper infill and lower infill may be the same type, or the types may be swapped relative to how they are described in the present example.

### Illustrative Crossbar Clamp

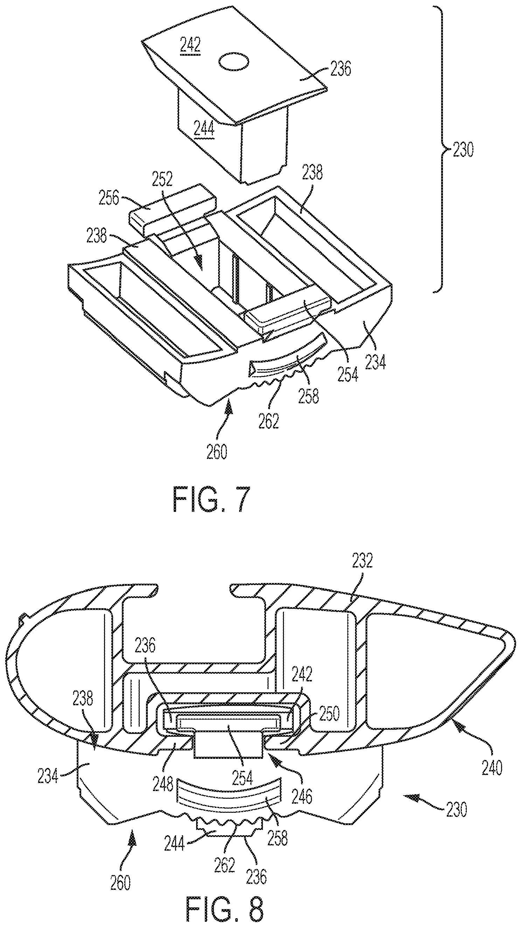

As shown in Figs. 7-8, this section describes an illustrative clamp 230 suitable for use with a slotted crossbar 232. Clamp 230 is a clamp that is connectible to the actuator of a crossbar-to-vehicle coupler, such that actuating the clamp causes the crossbar to be fixed to the coupler. Crossbar 232 is an example of crossbar 100 above, and is substantially identical to crossbar 100. Fig. 7 is an exploded isometric view of clamp 230, and Fig. 8 is an end view of clamp 230 assembled and inserted into a longitudinal bottom slot of crossbar 232, which is shown in section view.

Clamp 230 includes a crossbar seat 234 and a crossbar connector 236. Crossbar seat 234 may include any suitable structure configured to cradle crossbar 232 on a seating surface 238 that generally conforms to an outer surface 240 of the crossbar. Crossbar seat 234 may be described as an anvil. In some examples, seating surface 238 may include a resilient, compressible, and/or compliant layer, such as a rubber coating, to reduce damage to crossbar 232.

Crossbar connector 236 may include any suitable structure configured to capture (e.g., grasp or grip) crossbar 232, and to be movable relative to crossbar seat 234, such that the captured crossbar can be urged against seating surface 238. Crossbar connector 236 may be interchangeably referred to as a crossbar capturing member or crossbar capturing portion of clamp 230. In this example, crossbar connector 236 may be referred to as a tee or a mushroom.

Crossbar connector 236 includes a flange portion 242, also referred to as a cap or tee portion, and a stem portion 244. Flange portion 242 is a substantially planar plate or flange sized to slide into a lower T-slot 246 (also referred to as a tee slot) of slotted crossbar 232. As described above with respect to crossbar 100, T-slot 246 runs longitudinally along a length of crossbar 232, and comprises a pair of lips 248 and 250 defining a gap (i.e., slot 246) therebetween. Flange portion 242 has a width that spans slot 246, such that bottom surfaces of the flange portion may abut upper surfaces of lips 248 and 250 of the T-slot. Stem portion 244 extends or protrudes orthogonally from flange portion 242. Stem portion 244 may be sized such that stem portion 244 can extend through slot 246 when flange portion 242 is inserted in the slot, as shown in Fig. 8. Accordingly, crossbar connector 236 may freely slide in a longitudinal direction along slot 246 of crossbar 232.

Stem portion 244 may include a fastening mechanism, such as a threaded hole, for attaching connector 236 to a clamp actuator. Inserting crossbar connector 236 into T-slot 246 effectively captures crossbar 232.

Crossbar seat 234 includes a block having a central aperture 252, through which crossbar connector 236 can at least partially extend. For example, stem portion 244 may extend through aperture 252, as shown in Fig. 8. In some examples, stem portion 244 may be connectible to an actuator, such that the actuator can pull crossbar connector 236 downward through aperture 252. As can be seen in Fig. 8, this action will cause flange 242 to exert force on lips 248 and 250, pulling crossbar 232 down onto crossbar seat 234, thereby arresting the downward motion of the crossbar connector and clamping the crossbar in place (e.g., by pinching the lips between flange 242 and seat 234).

Crossbar seat 234 may include a pair of guide flanges 254 and 256 protruding from seating surface 238 on opposing sides of aperture 252. Guide flanges 254 and 256 may include any suitable structures axially aligned with each other and configured to mate in sliding engagement with crossbar slot 246. As with flange portion 242 of crossbar connector 236, guide flanges 254 and 256 may be passed into slot 246 through an end of the crossbar, in an axial direction with respect to the long axis of the crossbar. Guide flanges 254 and 256 are positioned on either end of flange portion 242 of the bar connector when assembled. Guide flanges 254 and 256 may be unitary with crossbar seat 234, and may function to maintain an orientation of the crossbar seat with respect to the crossbar slot, e.g., during assembly. Guide flanges 254 and 256 may not be load bearing structures. For example, clamping force may be applied to crossbar 232 by drawing bar connector 236 down onto crossbar seat 234. Flanges 254 and 256 are fixed relative to crossbar seat 234. Consequently, the guide flanges may not exert any substantive vertical force on the crossbar during a clamping operation.

Crossbar seat 234 also includes a retention ridge 258. A respective instance of ridge 258 may be present on one or more surfaces of seat 234, and may be configured to interface with a corresponding retaining feature of the coupler. For example, seat 234 may click into place with a retaining feature grabbing onto ridge 258 to hold the crossbar seat block in place on the coupler. Holding the crossbar seat in place may be temporary, as the crossbar seat is secured in place by subsequent clamping of the crossbar. A lower mating surface 260 may be shaped to engage or otherwise fit onto a corresponding support surface of the coupler. Lower mating surface 260 may include one or more additional features, such as discrete positioning teeth 262 configured to mate with corresponding teeth or features on the support surface of the coupler.

### Illustrative Coupler-Crossbar Combinations

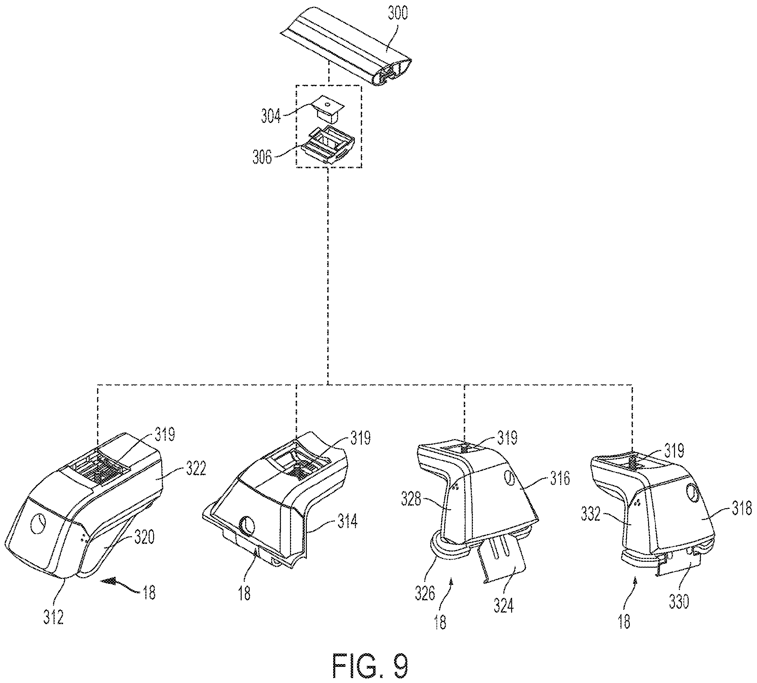

As shown in Fig. 9, this section describes various suitable combinations of an illustrative two-slotted crossbar 300 with a crossbar clamp 302 and different coupler styles. Crossbar 300 is an example of crossbar 100, described above. Clamp 302 is an example of clamp 230, and includes crossbar connector 304 and crossbar seat 306, both substantially as described above with respect to connector 236 and seat 234.

Crossbar 300 is versatile, in that the crossbar is attachable to several different couplers, such as couplers 312, 314, 316, 318 shown in Fig. 9. Although four such couplers are shown in Fig. 9 and described below, it should be understood that attachment of crossbar 300 is optional for any given coupler, and that more or fewer couplers may be available for such attachment. In general, a clamp actuator of the coupler includes an attachment bolt 319 protruding generally vertically from an upper surface of the coupler. Crossbar connector 304 is attached via this attachment screw, and seat 306 mates with an upper receiving surface of the coupler. A tightening screw of the actuator may protrude in an outboard or downward direction from the coupler.

As described above with respect to coupler 16, a coupler according to the present teachings includes any suitable device configured to mount a crossbar to a vehicle feature. Accordingly, couplers 312, 314, 316, 318 each include a vehicle interface 18 for clamping or otherwise connecting the coupler to a vehicle feature.

Specifically, coupler 312 is a strap-type coupler suitable for connecting the coupler to a raised rail feature of a vehicle. Raised rails generally include a pair of rails or bars each running parallel to the direction of vehicle travel and spaced above a respective lateral side of the rooftop. A strap 320 extends from a body 322 of this coupler, and is configured to pass under one of the raised rails while body 322 rests on top of the rail.

Coupler 314 is a fixed-point style of coupler, suitable for connecting to a base portion fixed to a vehicle rooftop. Retractable pins in vehicle interface portion 18 of coupler 314 extend into corresponding receptacles in the base (not pictured). An example of a coupler having this type of vehicle interface is described in U.S. Pat. No. 6,905,053, the entirety of which is hereby incorporated herein for all purposes.

Coupler 316 is a naked-roof style of coupler, suitable for connecting the coupler to a gutter or other slot running along a side of the vehicle rooftop. An adjustable clip 324 and rooftop seat 326 extend from a lower portion of a body 328 of coupler 316. Seat 326 sits atop the vehicle roof, while clip 324 grabs onto the vehicle gutter (or the like).

Coupler 318 is a two-clip flush rail type of coupler, similar to the couplers shown in Fig. 2. This style of coupler is suitable for connecting the coupler to a flush rail feature of a vehicle. Flush rails generally include a pair of rails or bars each running parallel to the direction of vehicle travel on respective lateral sides of the rooftop. In contrast with the raised rail, a flush rail abuts the vehicle roof such that no gap exists between the rail and the roof. A pair of clips 330 extend from a body 332 of coupler 318 to grasp the rail (see Fig. 2).

### Illustrative Manufacturing Method

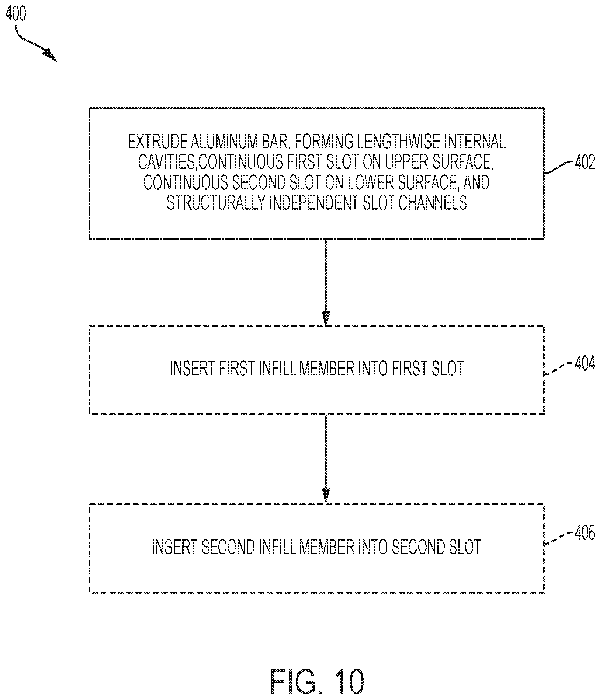

This section describes steps of an illustrative method for manufacturing a slotted crossbar in accordance with aspects of the present disclosure; see Fig. 10. Where appropriate, reference may be made to previously described components and systems that may be produced or used in carrying out each step. These references are for illustration, and are not intended to limit the possible ways of carrying out any particular step of the method.

Fig. 10 is a flowchart illustrating steps performed in an illustrative method, and may not recite the complete process or all steps of the method. Fig. 10 depicts multiple steps of a method, generally indicated at 400. Although various steps of method 400 are described below and depicted in Fig. 10, the steps need not necessarily all be performed, and in some cases may be performed in a different order than the order shown.

Step 402 includes extruding an aluminum (e.g., aluminum alloy) bar having a first end, a second end, and an elongated (e.g., aerodynamic) profile defining an upper surface and a lower surface of the bar. Step 402 further includes forming a plurality of lengthwise internal cavities passing continuously through the bar, a continuous first slot running lengthwise across the upper surface of the bar from the first end to the second end, and a continuous second slot running lengthwise across the lower surface of the bar from the first end to the second end. The first slot opens into a first channel, and the second slot opens into a second channel that is structurally independent from the first channel.

In some examples, the first channel has a floor and the second channel has a ceiling. The floor and ceiling are generally parallel (e.g., both horizontal) and spaced from each other.

In some examples, the extruding of step 402 further forms a pair of spaced-apart vertical webs spanning an internal height of the bar. These vertical webs define a forward cavity, a central cavity, and an aft cavity.

In some examples, the first slot is horizontally offset relative to the second slot. For example, the first slot may be disposed closer than the second slot to a leading edge of the bar.

In some examples, the upper surface of the bar is substantially flat in the vicinity of the first slot.

In some examples, the lower surface of the bar is curved.

In some examples, the extruding of step 402 further forms a longitudinal ridge protruding from a leading edge portion of the bar, the ridge being disposed above a vertex of the leading edge portion.

In some examples, a first wall thickness of a top portion of the bar is greater than a second wall thickness of a leading edge portion of the bar. For example, the first wall thickness may be at least twice as thick as the second wall thickness.

Optional step 404 includes inserting a first infill member in the first slot, the first infill member including a deformable resilient tube. For example, see infill 166 and corresponding description above.

Optional step 406 includes covering the second slot using a second infill member, the second infill member being selectively removable from the second slot. For example, see infill 168 and corresponding description above. In some examples, the second infill member is a flexible strip having a pair of parallel protrusions, the protrusions being removably insertable into the second slot to hold the flexible strip in place.

### Additional Examples

This section describes additional examples of slotted crossbars as well as related systems and methods.

For example, a crossbar for a vehicle rooftop cargo rack, can comprise
an elongate metal body having a first end, a second end, and an aerodynamic outer profile defining an upper surface and a lower surface of the body;
a continuous first slot running lengthwise across the upper surface from the first end to the second end; and
a continuous second slot running lengthwise across the lower surface from the first end to the second end.

For example, the first slot opens into a first continuous channel running lengthwise through the body of the crossbar, the first channel having a floor.

For example, the second slot opens into a second continuous channel running lengthwise through the body of the crossbar, the second channel having a ceiling.

For example, the floor of the first channel and the ceiling of the second channel are spaced from each other.

For example, a plurality of lengthwise internal cavities passing continuously through the body, the body including a pair of spaced-apart vertical webs spanning an internal height of the body, such that the plurality of lengthwise internal cavities includes a forward cavity, a central cavity, and an aft cavity.

For example, the first slot is horizontally offset relative to the second slot.

For example, the first slot is disposed closer than the second slot to a leading edge of the crossbar.

For example, the upper surface of the body is substantially flat in the vicinity of the first slot.

For example, the lower surface of the body is curved.

For example, further including a longitudinal ridge protruding from a leading edge portion of the body of the crossbar, the ridge being disposed above a vertex of the leading edge portion.

For example, a first wall thickness of a top portion of the body is greater than a second wall thickness of a leading edge portion of the body.

For example, the first wall thickness is at least twice as thick as the second wall thickness.

For example, the crossbar may further comprise a first infill member disposed in the first slot, the first infill member including a deformable resilient tube.

For example, the crossbar may further comprise a second infill member covering the second slot, the second infill member being selectively removable from the second slot.

For example, the second infill member is a flexible strip having a pair of parallel protrusions, the protrusions being removably insertable into the second slot to hold the flexible strip in place.

For example, the body of the crossbar comprises aluminum.

Another example is a rack for carrying cargo on top of a vehicle, the rack comprising:
a crossbar and a pair of couplers configured to mount the crossbar on top of a vehicle such that a long axis of the crossbar is substantially horizontal and perpendicular to a longitudinal axis of the vehicle;
the crossbar including an elongate metal body having a first end, a second end, and an aerodynamic outer profile defining an upper surface and a lower surface of the body;
a continuous first slot running lengthwise across the upper surface of the body of the crossbar from the first end to the second end, the first slot opening into a first channel; and
a continuous second slot running lengthwise across the lower surface of the body of the crossbar from the first end to the second end, the second slot opening into a second channel;
wherein the first channel and the second channel are structurally independent from each other.

For example, each coupler of the pair of couplers is configured to be clamped to the second slot of the crossbar.

For example, the crossbar further comprising a plurality of lengthwise internal cavities passing continuously through the body of the crossbar, and a pair of spaced-apart vertical webs spanning an internal height of the crossbar, such that the plurality of lengthwise internal cavities includes a forward cavity, a central cavity, and an aft cavity.

For example, the first slot is horizontally offset relative to the second slot.

For example, the first slot is disposed closer than the second slot to a leading edge of the crossbar.

For example, the upper surface of the body of the crossbar is substantially flat in the vicinity of the first slot.

For example, the lower surface of the body of the crossbar is curved.

For example, the crossbar further including a longitudinal ridge protruding from a leading edge portion of the body of the crossbar, the ridge being disposed above a vertex of the leading edge portion.

For example, a first wall thickness of a top portion of the body is greater than a second wall thickness of a leading edge portion of the body.

For example, the first wall thickness is at least twice as thick as the second wall thickness.

For example, a first infill member disposed in the first slot, the first infill member including a deformable resilient tube.

For example, a second infill member covering the second slot, the second infill member being selectively removable from the second slot.

For example, the second infill member is a flexible strip having a pair of parallel protrusions, the protrusions being removably insertable into the second slot to hold the flexible strip in place.

For example, the body of the crossbar comprises aluminum.

Finally, an additional example is a method of manufacturing a crossbar for a vehicle rooftop cargo rack, the method comprising:
extruding an aluminum bar having a first end, a second end, and an elongated profile defining an upper surface and a lower surface of the bar;
wherein the extruding step includes forming a plurality of lengthwise internal cavities passing continuously through the bar,
a continuous first slot running lengthwise across the upper surface of the bar from the first end to the second end, the first slot opening into a first channel, and
a continuous second slot running lengthwise across the lower surface of the bar from the first end to the second end, the second slot opening into a second channel that is structurally independent from the first channel.

For example, the first channel has a floor and the second channel has a ceiling, the floor and ceiling being generally parallel and spaced from each other.

For example, the extruding step further forms a pair of spaced-apart vertical webs spanning an internal height of the bar, such that the plurality of lengthwise internal cavities includes a forward cavity, a central cavity, and an aft cavity.

For example, the first slot is horizontally offset relative to the second slot.

For example, the first slot is disposed closer than the second slot to a leading edge of the bar.

For example, the upper surface of the bar is substantially flat in the vicinity of the first slot.

For example, the lower surface of the bar is curved.

For example, the extruding step further forms a longitudinal ridge protruding from a leading edge portion of the bar, the ridge being disposed above a vertex of the leading edge portion.

For example, a first wall thickness of a top portion of the bar is greater than a second wall thickness of a leading edge portion of the bar.

For example, the first wall thickness is at least twice as thick as the second wall thickness.

For example, the method may further comprise inserting a first infill member in the first slot, the first infill member including a deformable resilient tube.

For example, the method may further comprise covering the second slot using a second infill member, the second infill member being selectively removable from the second slot.

For example, the second infill member is a flexible strip having a pair of parallel protrusions, the protrusions being removably insertable into the second slot to hold the flexible strip in place.

For example, the elongated profile of the bar is aerodynamic.

### Advantages, Features, Benefits

The different embodiments and examples of the slotted crossbars described herein provide several advantages over known solutions. For example, illustrative embodiments and examples described herein provide an aerodynamic, aesthetically pleasing, and quiet crossbar, having enhanced stiffness and strength.

Additionally, and among other benefits, illustrative embodiments and examples described herein have different wall thicknesses in different portions of the crossbar, such that non-load bearing surfaces are thinner than load bearing surfaces, thereby reducing material usage.

Additionally, and among other benefits, illustrative embodiments and examples described herein have structurally independent upper and lower T-slots, such that the slots can be offset from each other and/or run the entire length of the crossbar. Separate channels associated with the slots may provide additional structural support to the crossbar.

Additionally, and among other benefits, illustrative embodiments and examples described herein have a continuous lower slot across the entire width of the crossbar, facilitating (a) improved manufacturability, as the crossbar can be extruded in its final form (i.e., eliminating the need for partial-width lower slots to be machined into the bar); and (b) versatility, as the crossbar can be used for a wide range of vehicle widths, because crossbar-to-vehicle couplers can be attached to the lower slot at any point along the length of the crossbar.

The extent of protection is determined by the appended claims.

## Claims

1. A crossbar (12; 50, 52; 100; 232; 300) for a vehicle rooftop cargo rack (10; 40), the crossbar comprising:
an elongate metal body (102) having a first end, a second end, and an aerodynamic outer profile defining an upper surface and a lower surface of the body;
a continuous first slot (104) running lengthwise across the upper surface from the first end to the second end; and
a single continuous second slot (106) running lengthwise across the lower surface from the first end to the second end,
wherein the body has a rounded leading edge portion on a forward side of the crossbar, **characterized in that**
the crossbar profile is asymmetrical with respect to a horizontal plane passing through a forward vertex (116) on the leading edge portion, such that an upper half of the crossbar has a different shape than a lower half of the crossbar,
wherein the upper surface comprises a top portion that is substantially flat in a vicinity of the continuous first slot and wherein the lower surface of the body of the crossbar is curved; and
wherein the crossbar profile further comprises a tapered trailing edge portion (112) on an aft side of the crossbar having a cutback angle (122) in the trailing edge portion (112) such that it truncates an otherwise long, symmetrical tapering of the trailing edge of the crossbar at an oblique angle.

2. The crossbar (12; 50, 52; 100; 232; 300) of claim 1, wherein the first slot is disposed in a suitable location along the upper surface where the shell is substantially flat to receive and support accessories mounted thereon and where the lower slot is disposed such that the lower slot is substantially centered on the curvature of the bottom portion.

3. The crossbar (12; 50, 52; 100; 232; 300) of any of the preceding claims 1-2, wherein the second slot is a T-slot including a lower channel formed by a pair of vertical walls joined by a substantially horizontal ceiling portion, the opening of the slot being formed below the lower channel by a pair of overhanging lips having respective end portions that are spaced apart to form a width of the lower slot.

4. The crossbar (12; 50, 52; 100; 232; 300) of any of the preceding claims, wherein the continuous first slot is horizontally offset relative to the second slot.

5. The crossbar (12; 50, 52; 100; 232; 300) of any of the preceding claims, further comprising a first infill member (166) disposed in the first slot, the first infill member including a deformable resilient tube.

6. The crossbar (12; 50, 52; 100; 232; 300) of any of the preceding claims, further comprising a second infill member (168) covering the second slot, the second infill member being selectively removable from the second slot.

7. The crossbar (12; 50, 52; 100; 232; 300) of claim 6, wherein the second infill member (168) is a flexible strip having a pair of parallel protrusions, the protrusions being removably insertable into the second slot to hold the flexible strip in place.

8. A rack (10) for carrying cargo on top of a vehicle, the rack comprising:
a crossbar (12; 50, 52; 100; 232; 300) as claimed in any of the preceding claims, and a pair of couplers (16) configured to mount the crossbar on top of a vehicle such that a long axis of the crossbar is substantially horizontal and perpendicular to a longitudinal axis of the vehicle;
the crossbar (12; 50, 52; 100; 232; 300) including an elongate metal body (102) having a first end, a second end, and an aerodynamic outer profile defining an upper surface and a lower surface of the body;
a continuous first slot (104) running lengthwise across the upper surface of the body of the crossbar from the first end to the second end, the first slot opening into a first channel (134); and
a single continuous second slot (106) running lengthwise across the lower surface of the body of the crossbar from the first end to the second end, the second slot opening into a second channel (148);
wherein the first channel and the second channel are structurally independent from each other,
the rack further comprising a pair of clamps, each clamp connectible to an actuator of the couplers, such that actuating the clamp causes the crossbar to be fixed to the coupler.

9. The rack (10) of claim 8, wherein the clamp includes a crossbar seat and a crossbar connector, the crossbar seat including a structure configured to cradle the crossbar on a seating surface that generally confirms to an outer surface of the crossbar, and the crossbar connector having a structure configured to capture the crossbar and to be movable relative to the crossbar seat such that the captured crossbar can be urged against the seating surface.

10. The rack (10) of claim 8 or 9, wherein the clamp actuator includes an attachment bolt protruding generally vertically from an upper surface of the coupler and the crossbar connector is attached via this attachment bolt and the seat mates with an upper receiving surface of the coupler.

## Patentansprüche

1. Querträger (12; 50, 52; 100; 232; 300) für einen Fahrzeugdachgepäckträger (10; 40), wobei der Fahrzeugdachgepäckträger umfasst:
einen langgestreckten Metallkörper (102) mit einem ersten Ende, einem zweiten Ende und einem aerodynamischen Außenprofil, das eine obere Fläche und eine untere Fläche des Körpers definiert;
einen durchgehenden ersten Schlitz (104), der in Längsrichtung über die obere Fläche vom ersten Ende zum zweiten Ende verläuft; und
einen einzelnen durchgehenden zweiten Schlitz (106), der in Längsrichtung über die untere Fläche vom ersten Ende zum zweiten Ende verläuft, wobei der Körper einen abgerundeten Vorderkantenabschnitt an einer vorderen Seite des Querträgers aufweist, **dadurch gekennzeichnet, dass**
das Querträgerprofil asymmetrisch in Bezug auf eine horizontale Ebene ist, die durch einen vorderen Scheitelpunkt (116) auf dem Vorderkantenabschnitt verläuft, so dass eine obere Hälfte des Querträgers eine andere Form als eine untere Hälfte des Querträgers aufweist, wobei die obere Fläche einen oberen Abschnitt umfasst, der in der Nähe des durchgehenden ersten Schlitzes im Wesentlichen flach ist und wobei die untere Fläche des Körpers des Querträgers gekrümmt ist; und
wobei das Querträgerprofil ferner einen sich verjüngenden Hinterkantenabschnitt (112) an einer hinteren Seite des Querträgers umfasst, der einen Rückschnittwinkel (122) in dem Hinterkantenabschnitt (112) aufweist, so dass er eine sonst lange, symmetrische Verjüngung der Hinterkante des Querträgers in einem schrägen Winkel abschneidet.

2. Querträger (12; 50, 52; 100; 232; 300) nach Anspruch 1, wobei der erste Schlitz an einer geeigneten Stelle entlang der oberen Fläche angeordnet ist, wo die Schale im Wesentlichen flach ist, um darauf montiertes Zubehör aufzunehmen und zu tragen, und wobei der untere Schlitz so angeordnet ist, dass der untere Schlitz im Wesentlichen auf der Krümmung des unteren Abschnitts zentriert ist.

3. Querträger (12; 50, 52; 100; 232; 300) nach einem der vorhergehenden Ansprüche 1 bis 2, wobei der zweite Schlitz ein T-Schlitz ist, der einen unteren Kanal einschließt, der durch ein Paar vertikaler Wände gebildet wird, die durch einen im Wesentlichen horizontalen Deckenabschnitt verbunden sind, wobei die Öffnung des Schlitzes unterhalb des unteren Kanals durch ein Paar überhängender Lippen gebildet wird, die jeweilige Endabschnitte aufweisen, die voneinander beabstandet sind, um eine Breite des unteren Schlitzes zu bilden.

4. Querträger (12; 50, 52; 100; 232; 300) nach einem der vorhergehenden Ansprüche, wobei der durchgehende erste Schlitz relativ zum zweiten Schlitz horizontal versetzt ist.

5. Querträger (12; 50, 52; 100; 232; 300) nach einem der vorhergehenden Ansprüche, die ferner ein erstes Füllelement (166) umfasst, das in dem ersten Schlitz angeordnet ist, wobei das erste Füllelement ein verformbares, elastisches Rohr einschließt.

6. Querträger (12; 50, 52; 100; 232; 300) nach einem der vorhergehenden Ansprüche, die ferner ein zweites Füllelement (168) umfasst, das den zweiten Schlitz abdeckt, wobei das zweite Füllelement selektiv aus dem zweiten Schlitz entfernt werden kann.

7. Querträger (12; 50, 52; 100; 232; 300) nach Anspruch 6, wobei das zweite Füllelement (168) ein flexibler Streifen mit einem Paar paralleler Vorsprünge ist, wobei die Vorsprünge in den zweiten Schlitz herausnehmbar eingesetzt werden können, um den flexiblen Streifen an seinem Platz zu halten.

8. Träger (10) zum Tragen von Gepäck auf dem Dach eines Fahrzeugs, wobei der Träger umfasst: einen Querträger (12; 50, 52; 100; 232; 300), wie in einem der vorhergehenden Ansprüche beansprucht, und ein Paar von Verbindungsstücken (16), die so ausgelegt sind, dass die Querträger auf dem Dach eines Fahrzeugs montiert werden, dass eine Längsachse des Querträgers im Wesentlichen horizontal und senkrecht zu einer Längsachse des Fahrzeugs ist;
wobei die Querträger (12; 50, 52; 100; 232; 300) einen langgestreckten Metallkörper (102) mit einem ersten Ende, einem zweiten Ende und einem aerodynamischen Außenprofil einschließt, das eine obere Fläche und eine untere Fläche des Körpers definiert;
einen durchgehenden ersten Schlitz (104), der in Längsrichtung über die obere Fläche des Körpers der Querträger vom ersten Ende zum zweiten Ende verläuft, wobei sich der erste Schlitz in einen ersten Kanal (134) öffnet; und einen einzelnen durchgehenden zweiten Schlitz (106), der in Längsrichtung über die untere Fläche des Körpers des Querträgers vom ersten Ende zum zweiten Ende verläuft, wobei sich der zweite Schlitz in einen zweiten Kanal (148) öffnet;
wobei der erste Kanal und der zweite Kanal strukturell unabhängig voneinander sind,
der Träger ferner ein Paar Klammern umfasst, wobei jede Klammer mit einem Betätigungselement der Verbindungsstücke verbunden werden kann, so dass die Betätigung der Klammer bewirkt, dass der Querträger an das Verbindungsstück befestigt wird.

9. Träger (10) nach Anspruch 8, wobei die Klammer einen Querträgersitz und einen Querträgerverbinder einschließt, wobei der Querträgersitz eine Struktur einschließt, die so ausgelegt ist, dass sie den Querträger auf einer Sitzfläche hält, die im Allgemeinen mit einer Außenfläche des Querträgers übereinstimmt, und der Querträgerverbinder eine Struktur aufweist, die so ausgelegt ist, dass sie den Querträger einfängt und relativ zu dem Querträgersitz beweglich ist, so dass der eingefangene Querträger gegen die Sitzfläche gedrückt werden kann.

10. Träger (10) nach Anspruch 8 oder 9, wobei das Klammerbetätigungselement einen Befestigungsbolzen einschließt, der im Allgemeinen vertikal von einer oberen Fläche des Verbindungsstücks vorsteht, und der Querträgerverbinder über diesen Befestigungsbolzen befestigt ist und der Sitz mit einer oberen Aufnahmefläche des Verbindungsstücks übereinstimmt.

## Revendications

1. Une barre transversale (12; 50, 52; 100; 232; 300) pour un support de cargaison sur le toit d'un véhicule (10; 40), la barre transversale comprenant :
un corps métallique allongé (102) ayant une première extrémité, une seconde extrémité et un profil externe aérodynamique définissant une surface supérieure et une surface inférieure du corps;
une première fente continue (104) courant longitudinalement, de la première à la seconde extrémité; le long de la surface supérieure et
une seule seconde fente continue (106) courant longitudinalement, de la première à la seconde extrémité, le long de la surface inférieure;
dans laquelle le corps, sur un côté avant de la barre transversale, présente une partie de bord d'attaque arrondie, **caractérisée en ce que**
le profil de la barre transversale est asymétrique par rapport à un plan horizontal passant par un sommet avant (116) de la partie du bord d'attaque, de sorte qu'une moitié supérieure de la barre transversale a une forme différente de celle d'une moitié inférieure de la barre transversale,
dans laquelle la surface supérieure comprend une partie supérieure qui est sensiblement plate à proximité de la première fente continue et dans laquelle la surface inférieure du corps de la barre transversale est courbe; et
dans laquelle le profil de la barre transversale comprend en outre, sur un côté arrière de la barre transversale, une partie de bord de fuite conique (112) présentant un angle de coupe (122) dans la partie du bord de fuite (112) de sorte qu'il tronque un rétrécissement par ailleurs long et symétrique du bord de fuite de la barre transversale selon un angle oblique.

2. La barre transversale (12; 50, 52; 100; 232; 300) selon la revendication 1, dans laquelle la première fente est disposée dans une zone appropriée le long de la surface supérieure où la coquille est sensiblement plate pour recevoir et supporter les accessoires montés sur elle et où la fente inférieure est disposée de telle sorte que la fente inférieure est sensiblement centrée sur la courbure de la partie inférieure.

3. La barre transversale (12; 50, 52; 100; 232; 300) de l'une quelconque des revendications précédentes 1-2, dans laquelle la seconde fente est une fente en T incluant un canal inférieur formé par une paire de parois verticales reliées par une partie de plafond essentiellement horizontale, l'ouverture de la fente étant formée en dessous du canal inférieur par une paire de lèvres en surplomb ayant des parties d'extrémité respectives qui sont espacées pour former la largeur de la fente inférieure.

4. La barre transversale (12; 50, 52; 100; 232; 300) selon une quelconque des revendications précédentes, dans laquelle la première fente continue est horizontalement décalée par rapport à la seconde fente.

5. La barre transversale (12; 50, 52; 100; 232; 300) selon une quelconque des revendications précédentes, comprenant un premier membre intercalaire (166) disposé dans la première fente, le premier membre intercalaire incluant un tube résistant déformable.

6. La barre transversale (12; 50, 52; 100; 232; 300) selon une quelconque des revendications précédentes, comprenant en outre un second membre intercalaire (168) couvrant la seconde fente, le second membre intercalaire étant sélectivement amovible à partir de la seconde fente.

7. La barre transversale (12; 50, 52; 100; 232; 300) selon la revendication 6, dans laquelle le second membre de remplissage (168) est une bande flexible ayant une paire de saillies parallèles, les saillies étant insérées de manière amovible dans la seconde fente pour maintenir la bande flexible en place.

8. Un support (10) pour transporter une cargaison sur le dessus d'un véhicule, le support comprenant:
une barre transversale (12; 50, 52; 100; 232; 300) telle que revendiquée dans une quelconque des revendications précédentes, et une paire de coupleurs (16) configurés pour le montage de la barre transversale au-dessus d'un véhicule de sorte qu'un long axe de la barre transversale soit substantiellement horizontal et perpendiculaire à l'axe longitudinal du véhicule;
la barre transversale (12; 50, 52; 100; 232; 300) comprenant un corps métallique allongé (102) ayant une première extrémité, une seconde extrémité, et un profil externe aérodynamique définissant une surface supérieure et une surface inférieure du corps;
une première fente continue (104) courant longitudinalement le long de la surface supérieure du corps de la barre transversale, de la première à la seconde extrémité, la première fente s'ouvrant sur un premier canal (134); et
une seule seconde fente continue (106) courant longitudinalement le long de la surface inférieure du corps de la barre transversale, de la première à la seconde extrémité, la seconde fente s'ouvrant sur un seconde canal (148);
dans lequel le premier canal et le second canal sont structurellement indépendants l'un de l'autre, le support comprenant en outre une paire de pinces, chaque pince étant connectable à un actionneur des coupleurs, de sorte que l'actionnement de la pince provoque la fixation de la barre transversale au coupleur.

9. Le support (10) selon la revendication 8, dans lequel la pince comprend un siège à barre transversale et un connecteur à barre transversale, le siège de la barre transversale comprenant une structure configurée pour former un berceau pour la barre transversale sur une surface d'assise qui s'accouple généralement à une surface extérieure de la barre transversale, et le connecteur à barre transversale ayant une structure configurée pour que puisse s'adapter la barre transversale et pour être mobile par rapport au siège de la barre transversale de sorte que la barre transversale capturée puisse être pressée contre la surface d'assise.

10. Le support (10) selon les revendications 8 ou 9, dans lequel l'actionneur de la pince inclut un boulon de fixation saillant généralement verticalement depuis une surface supérieure du coupleur et le connecteur de barre transversale est attaché par ce boulon de fixation et le siège s'accouple avec la surface de réception supérieure d'un coupleur.
